# EUROPÄISCHE PATENTANMELDUNG

(11) **EP 1 298 840 A1**
(43) Veröffentlichungstag der Anmeldung: **02.04.2003**
(21) Anmeldenummer: 01123506.6
(22) Anmeldetag: 28.09.2001
(51) Int. Cl.: H04L 12/24, H04L 12/26

(54) **Netzwerk-Performance-Management**

(71) Anmelder: SIEMENS AKTIENGESELLSCHAFT, 80333 München (DE)
(72) Erfinder: Schwagmann, Josef, 85221 Dachau (DE)

(57) **Zusammenfassung**

Bei einem Verfahren zum Management der Performance eines Kommunikationsnetzwerkes, bestehend aus einer Vielzahl von Netzelementen, wobei in vorbestimmten Netzelementen Performancemessungen für Performance-Indikatoren durchgeführt werden und die Daten der Performancemessungen einem Performance-Management zur Weiterverarbeitung und/oder Analyse zugeführt werden, sind für einige oder alle Performance-Indikatoren jeweilige Schwellwerte vorbestimmt, werden die Performance-Messungen mit den entsprechenden Schwellwerten werden, und es werden nur solche Performance-Messungen weiterverarbeitet und/oder analysiert, die die jeweiligen Schwellwertbedingungen erfüllen.

## Beschreibung

Die Erfindung betrifft ein Verfahren zum Performance-Management von Kommunikationsnetzwerken, insbesondere Telekommunikationsnetzwerken, die eine große Anzahl von Netzwerkelementen enthalten, gemäß dem Oberbegriff des Patentanspruchs 1.

Das Management von Telekommunikationsnetzwerken beinhaltet eine große Anzahl von Netzwerksbetriebsprozeßen, die sich grob in drei Klassen unterteilt lassen, nämlich Aufbau des Netzwerkes, Betrieb des Netzwerkes und Entwicklung des Netzwerkes. Ein Beispiel eines Netzwerk-Managements ist in WO99/20034 beschrieben.

Der Bereich des Betriebs und Unterhalt des Netzwerks betrifft die täglichen Arbeitsroutinen zum Betreiben und Unterhalten des Netzwerkes. Darunter fallen die Fehlerbehandlung innerhalb des Netzwerkes in Echtzeit, das Abarbeiten von Alarmmeldungen, Lokalisieren und Analysieren der Fehler und das Durchführen von Reparaturen.

Ein typisches Telekommunikationsnetzwerk besteht aus einer großen Anzahl von Netzwerkelementen NE, einschließlich Schaltknoten, Basisstationen, Übertragungsknoten, etc.. Beispielsweise besteht in großes Netzwerk aus zehntausenden Netzwerkelementen, wobei jedes Netzwerkelement aus einer Vielzahl von Einheiten bestehen kann. Aufgrund dieser komplexen Natur eines derartigen Netzwerks kommt es täglich zu einer großen Anzahl von Fehlermeldungen, wobei jeder Fehler sich in einem oder mehreren Alarmmeldungen manifestieren kann. Es ist jedoch auch möglich, daß ein Fehler sich überhaupt nicht in einem Alarm äußert.

Um das Netzwerk zu Betreiben und zu Beobachten, ist mindestens ein Netzwerk-Managementsystem im Netzwerk angeordnet, in dem Alarmmeldungen und andere Netzwerkinformationen gesammelt und ausgewertet werden, um das Netzwerk zu steuern und Wartungen durchzuführen.

Ferner weist das Netzwerk-Managementsystem üblicherweise ein Performance-Management bzw. ein Performance-Managementsystem auf, in dem Performance-Messungen zusammengeführt werden, anhand derer die Leistungsfähigkeit oder Performance des Netzwerkes und seiner Abschnitte ermittelt werden, um den Betrieb des Netzwerks zu optimieren, die Servicequalität zu verbessern und das Netzwerk so auszulasten, daß die Kosten minimiert werden.

Diese Performance-Messungen von geeigneten Performance-Indikatoren werden in vorbestimmten Netzwerkelementen oder Netzwerkknoten vorgenommen und umfassen beispielsweise die Ermittlung der Häufigkeit von Anrufversuchen, blockierten oder abgebrochenen Anrufe, fehlgeschlagenen Handover-Prozesse, Zellenverlusten bei ATM-Netzen (ATM: Asynchronous Transmission Mode), Bit-Fehlerraten, und Packetverlusten bei IP-Netzen. Die in den Netzwerkelementen erzeugten Performance-Daten werden in den Netzwerkelementen üblicherweise zwischengespeichert und in vorbestimmten zeitlichen Intervallen von dem Performance-Management abgerufen. Dort werden diese Daten üblicherweise in eine Performance-Datenbank abgelegt und ausgewertet. Diese Zeitintervalle, in denen die Daten abgerufen bzw. übertragen werden, betragen im allgemeinen 5 bis 15 Minuten.

Bei diesen Messungen entstehen in den entsprechenden Netzelementen große Mengen an Performance-Daten. Alle diese Daten werden gesammelt, in entsprechenden Speichermedien gespeichert und dem Performance-Management zur Auswertung übermittelt. Nachdem dann im Performance-Management festgestellt wurde, daß die Daten im zulässigen Bereich liegen, werden die Daten zu Werten über größere Zeiträume aggregiert, beispielsweise können für eine offline Auswertung die Daten für eine vorgegebene Zeit, beispielsweise 24 h, gesammelt und ausgewertet werden. Die Rohdaten werden anschließend vernichtet.

Da, wie bereits im Vorangegangenen erwähnt wurde, aufgrund der Komplexität und Größe des Netzwerks große Mengen an Rohdaten anfallen, ist das Handling dieser Datenmengen zeitraubend, so daß wesentliche Informationen über kritische Wegstrecken im Netz und/oder kritischer Netzelemente erst aufwendig aus der Datenmenge extrahiert werden müssen.

Der Erfindung liegt daher die Aufgabe zugrunde, ein Verfahren zum Management der Performance eines Kommunikationsnetzwerkes zu schaffen, bei dem die anfallende Menge an Performance-Daten der Netzelemente reduziert wird, so daß die anschließende Auswertung zielgerichteter erfolgen kann.

Diese Aufgabe wird durch ein Verfahren nach Anspruch 1 gelöst. Bevorzugte Ausführungsformen der Erfindung sind Gegenstand der Unteransprüche.

Bei dem erfindungsgemäßen Verfahren zum Management der Performance eines Kommunikationsnetzwerkes, das aus einer Vielzahl von Netzelementen besteht, wobei in Netzelementen Performancemessungen für geeignete Performance-Indikatoren durchgeführt werden und die Daten der Performancemessungen einem Performance-Management zur Weiterverarbeitung und/oder Analyse zugeführt werden, sind für einige oder alle Performance-Indikatoren jeweilige Schwellwerte vorbestimmt. Es werden die Performance-Messungen mit den entsprechenden Schwellwerten verglichen und nur solche Performance-Messungen weiterverarbeitet und/oder analysiert, die die jeweiligen Schwellwertbedingungen erfüllen. Durch eine derartige Definition von Schwellwerten für einen Teil oder alle Performance-Indikatoren kann die anfallende Datenmenge deutlich reduziert werden. Die Schwellwerte sind spezifisch für den jeweiligen Performance-Indikator, wobei mit dem Schwellwert eine Schwellwertbedingung verknüpft ist, beispielsweise muß der Meßwert eines Performance-Indikators in dem betrachteten Netzelement den Schwellwert überschreiten oder unterschreiten. Andere Bedingungen wie beispielsweise "gleich", "größer gleich", "kleiner gleich" oder "Ereignis tritt ein oder nicht" können je nach der Art des Performance-Indikators verwendet werden. Üblicherweise werden Performance-Messungen nur in solchen Netzelementen durchgeführt, die für den Datenverkehr auf dem Netz, beispielsweise aufgrund des Verkehrsaufkommens, wichtig sind oder wo es erfahrungsgemäß zu Engpässen kommen kann.

Der Vergleich der Performance-Meßdaten mit den Schwellwerten kann direkt im entsprechenden Netzelement oder im Performance-Management erfolgen. Beide Varianten haben ihre eigenen Vorteile. Erfolgt der Vergleich im Netzwerkelement direkt, so vermindert sich die an das Performance-Management zu übertragende Datenmenge, allerdings müssen die Schwellwerte in umgekehrter Richtung an die entsprechenden Netzelemente übertragen werden. Erfolgt der Vergleich im Performance-Management direkt, kann eine Anpassung oder Änderung der Schwellwerte einfach vorgenommen werden.

Es ist auch möglich, erste Schwellwerte für den Vergleich im Netzelement zu definieren und die dann an das Performance-Management übertragenen Performancedaten einer zweiten Filterung mit zweiten Schwellwerten zu unterziehen, die beispielsweise eine feinere Filterung als die Filterung mittels der ersten Schwellwerte ermöglicht. Mit anderen Worten, in den Netzelementen wird eine Vorselektion und im Performance-Management eine Feinselektion der Daten durchgeführt.

In einer weiteren bevorzugten Ausführungsform der Erfindung werden in den Netzelementen nur diejenigen Performance-Indikatoren gemessen, die in der Vergangenheit die Schwellwertbedingungen nicht oder nicht regelmäßig erfüllt haben, so daß die Messungen auf diejenigen Performance-Indikatoren beschränkt werden können, die in der Vergangenheit zur Problemerkennung beigetragen haben. Derartigen Indikatoren werden als signifikante Indikatoren bezeichnet. Diese Auslese kann natürlich auch mit dem im Vorangegangenen erwähnten zweistufigen Schwellwertsystem durchgeführt werden.

Ferner ist es möglich, die Performance-Messungen nur in denjenigen Netzelementen durchzuführen, in denen Performance-Indikatoren in der Vergangenheit die jeweiligen Schwellwertbedingungen nicht oder nicht regelmäßig erfüllten. Mit anderen Worten, es kann eine weitere Verringerung der Datenmenge erreicht werden, wenn Messungen signifikanter Indikatoren auch nur in solchen Netzelementen durchgeführt werden, in denen die signifikanten Indikatoren in der Vergangenheit die Schwellwertbedingungen nicht oder wenigstens gelegentlich nicht erfüllten. Dadurch können im Maximalfall alle diejenigen Netzelemente, bei denen es nicht zu einer Nichterfüllung der Schwellwertbedingungen gekommen war, von den Performance-Messungen entweder ganz oder teilweise (zeitweise) ausgeschlossen werden. Es kann also für diese Netzelemente die Häufigkeit der Durchführung von Performance-Messungen verringert werden, was zu einer weiteren Verringerung der anfallenden Datenmenge führt.

In einer weiteren Ausführungsform wird eine Prioritätsliste derjenigen Netzelemente aufgestellt, in denen es in der Vergangenheit zu einer Nichterfüllung der Schwellwertbedingungen gekommen war. Dabei kann die Prioritätsliste anhand vorgegebener, insbesondere an das jeweilige Problem angepaßter Kriterien aufgestellt werden, beispielsweise anhand der Häufigkeit des Nichterfüllens der Schwellwertbedingung eines bestimmten Performance-Indikators. Die Analyse der Performance-Messungen solcher Netzelemente wird mit Priorität ausgeführt, so daß es möglich ist, beispielsweise Diagnoseprogramme gezielter einzusetzen.

## Patentansprüche

1. Verfahren zum Management der Performance eines Kommunikationsnetzwerkes, bestehend aus einer Vielzahl von Netzelementen, wobei in vorbestimmten Netzelementen Performancemessungen für Performance-Indikatoren durchgeführt werden und die Daten der Performancemessungen einem Performance-Management zur Weiterverarbeitung und/oder Analyse zugeführt werden, **dadurch gekennzeichnet, daß** für einige oder alle Performance-Indikatoren jeweilige Schwellwerte vorbestimmt sind, die Performance-Messungen mit den entsprechenden Schwellwerten verglichen werden, und nur solche Performance-Messungen weiterverarbeitet und/oder analysiert werden, die die jeweiligen Schwellwertbedingungen erfüllen

2. Verfahren nach Anspruch 1, **dadurch gekennzeichnet, daß** die Schwellwertbedingung in einem Überschreiten oder Unterschreiten der vorbestimmten Schwelle besteht.

3. Verfahren nach einem der Ansprüche 1 oder 2, **dadurch gekennzeichnet, daß** der Vergleich der Performance-Meßdaten mit den Schwellwerten im Netzelement erfolgt.

4. Verfahren nach einem der Ansprüche 1 oder 2, **dadurch gekennzeichnet, daß** der Vergleich der Performance-Meßdaten mit den Schwellwerten im Performance-Management erfolgt.

5. Verfahren nach einem der Ansprüche 1 oder 2, **dadurch gekennzeichnet, daß** der Vergleich der Performance-Meßdaten mit ersten Schwellwerten in den Netzelementen und der Vergleich der restlichen Performance-Meßdaten mit zweiten Schwellwerten im Performance-Management erfolgt.

6. Verfahren nach einem der vorangegangenen Ansprüche, **dadurch gekennzeichnet, daß** in den Netzelementen nur diejenigen Performance-Indikatoren gemessen werden, die in der Vergangenheit die Schwellwertbedingungen nicht oder nicht regelmäßig erfüllten.

7. Verfahren nach einem der vorangegangenen Ansprüche, **dadurch gekennzeichnet, daß** Performance-Messungen nur in denjenigen Netzelementen durchgeführt werden, in denen Performance-Indikatoren in der Vergangenheit die jeweiligen Schwellwertbedingungen nicht oder nicht regelmäßig erfüllten.

8. Verfahren nach einem der vorangegangenen Ansprüche, **dadurch gekennzeichnet, daß** die Analyse der Performance-Messungen solcher Netzelemente mit Priorität ausgeführt wird, deren Performance-Indikatoren in der Vergangenheit die Schwellwertbedingungen nicht oder nicht regelmäßig erfüllten.
